# EUROPEAN PATENT APPLICATION

(11) **EP 3 961 853 A1**
(43) Date of publication of application: **02.03.2022**
(21) Application number: 21194183.6
(22) Date of filing: 31.08.2021
(51) Int. Cl.: H02J 7/00

(54) **CHARGING HUB WITH SATELLITE DEVICES**

(30) Priority: 31.08.2020 US 202063072618 P
(71) Applicant: Techtronic Cordless GP, Anderson, SC 29621 (US)
(72) Inventor: WILLIAMS, Brianna E., Greenville, 29607 (US); JENKINS, J. Luke, Williamston, 29697 (US); HUGHETT, Stephen A., Anderson, 29621 (US); MCNABB, William M., Anderson, 29621 (US); BARR III, Robert S., Salem, 29676 (US)
(74) Representative: Grünecker Patent- und Rechtsanwälte PartG mbB

(57) **Abstract**

A charging hub includes a housing and a battery pack. The housing includes a body having a base, and a plurality of satellite device receptacles positioned on the body. The plurality of satellite device receptacles is configured to removably couple a plurality of satellite devices to the body. Each receptacle has an electrical connector configured to charge the plurality of satellite devices. The housing also includes a battery receptacle positioned on the body. The battery pack is removably coupled to the housing at the battery receptacle. The battery pack is operable to provide power to the electrical connectors.

## Description

### CROSS-REFERENCE TO RELATED APPLICATIONS

This application claims priority to U.S. Provisional Application No. 63/072,618, filed August 31, 2020, the entire contents of which are incorporated by reference herein.

### BACKGROUND

The present disclosure relates to a charging hub for charging satellite devices mounted to the charging hub.

Many devices, such as flashlights, are battery-powered. Some devices use rechargeable batteries to power the devices. Typically, these types of devices are individually charged by separate charging cables when the rechargeable batteries become depleted, or the batteries are removed from the devices and recharged in a separate charger.

### SUMMARY

In one aspect, the disclosure provides a charging hub that may include a housing and a battery pack. The housing may include a body having a base, and a plurality of satellite device receptacles positioned on the body. The plurality of satellite device receptacles may be configured to removably couple a plurality of satellite devices to the body. Each receptacle may have an electrical connector configured to charge the plurality of satellite devices. The housing may also include a battery receptacle positioned on the body. The battery pack may be removably coupled to the housing at the battery receptacle. The battery pack may be operable to provide power to the electrical connectors.

In another aspect, the disclosure provides a charging hub and satellite device kit that may include a charging hub, a first satellite device, and a second satellite device. The charging hub may include a plurality of receptacles. The charging hub may be configured to receive power from a power supply. The first satellite device may be removably coupled to one of the plurality of receptacles. The first satellite device may have a first rechargeable battery configured to be charged by the power supply when the first satellite device is coupled to the one of the plurality of receptacles. The first satellite device may be operable to perform a first function. The second satellite device may be removably coupled to another of the plurality of receptacles. The second satellite device may have a second rechargeable battery configured to be charged by the power supply when the second satellite device is coupled to the another of the plurality of receptacles. The second satellite device may be operable to perform a second function that is different from the first function.

In another aspect, the disclosure provides a method of charging a satellite device with a charging hub. The satellite device may include a rechargeable battery. The charging hub may include a housing having a receptacle and a battery pack removably coupled to the housing. The method may include coupling the satellite device to the receptacle of the charging hub, monitoring a voltage of the satellite device, sending a wakeup signal from the satellite device to the charging hub when the voltage falls below a predetermined threshold, and in response to the wakeup signal, charging the satellite device with the battery pack connected to the charging hub.

Other aspects of the disclosure will become apparent by consideration of the detailed description and accompanying drawings.

### BRIEF DESCRIPTION OF THE DRAWINGS

FIG. 1 is a perspective view of a charging hub according to one implementation of the disclosure.
FIG. 2 is a perspective view of the charging hub of FIG. 1 having a plurality of satellite devices coupled thereto, the charging hub conveying power from a cord to the plurality of satellite devices.
FIG. 3 is a perspective view of the charging hub of FIG. 1 having a plurality of satellite devices coupled thereto, the charging hub being lifted by an operator at a handle.
FIG. 4 is a perspective view of the charging hub of FIG. 1 having a plurality of satellite devices being coupled thereto by an operator.
FIG. 5 is a perspective view of one of the plurality of satellite devices of FIG. 4 according to one implementation of the disclosure.
FIG. 6 is a diagram of a kit including the charging hub of FIG. 1 and a plurality of different satellite devices.
FIG. 7 is a perspective view of a charging hub according to another implementation of the disclosure.
FIG. 8 is a diagram of potential use configurations of a system including the charging hub of FIG. 7.
FIG. 9 is a perspective view of a charging hub according to another implementation of the disclosure.
FIG. 10 is a perspective view of the charging hub of FIG. 9 with a satellite device removed.
FIG. 11 is a bottom perspective view of the charging hub of FIG. 9 with a battery pack removed.
FIG. 12 is a cross sectional view of the charging hub of FIG. 9.
FIG. 13 is a schematic of a charging hub system architecture.
FIG. 14 is a flowchart depicting of method of operating the charging hub of FIG. 9.

### DETAILED DESCRIPTION OF THE DRAWINGS

Before any implementations of the disclosure are explained in detail, it is to be understood that the disclosure is not limited in its application to the details of construction and the arrangement of components set forth in the following description or illustrated in the following drawings. The disclosure is capable of other implementations and of being practiced or of being carried out in various ways. The terms "substantially", "generally", and "about" may be used herein to encompass both "exactly" and "approximately".

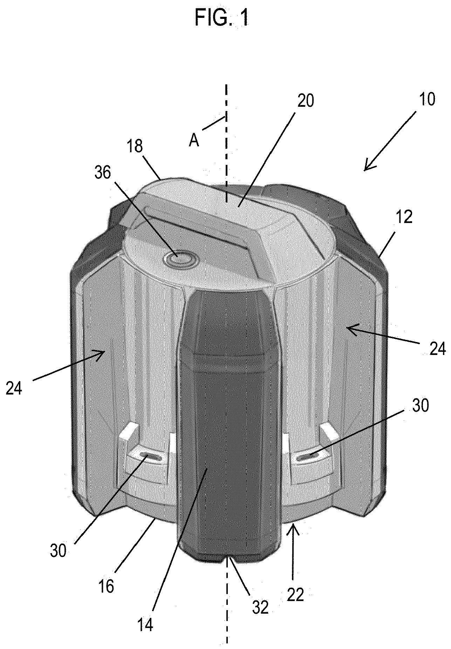

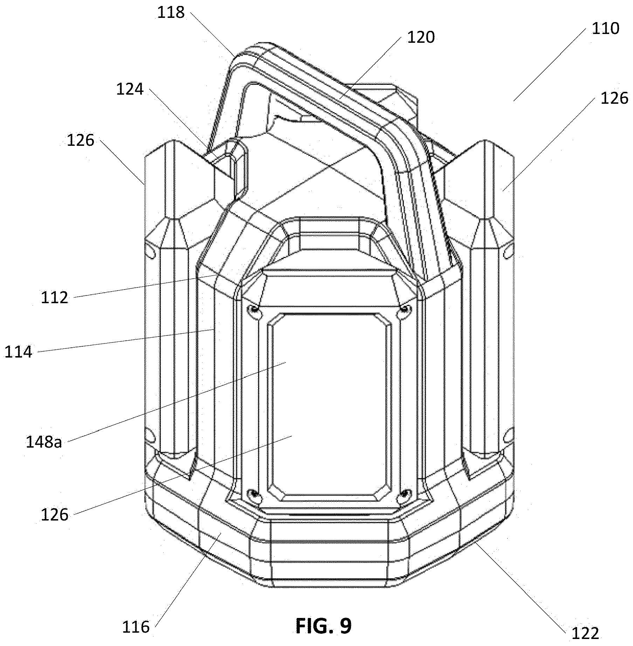

FIG. 1 illustrates a charging hub 10 according to one implementation of the disclosure. The charging hub 10 may include a housing 12 defining a body 14 having a base 16 and a handle 18. The handle 18 may extend from a top of the body 14 to provide a grip surface 20 for an operator to grasp and lift the charging hub 10. In other implementations, the handle 18 may be disposed on any side of the charging hub 10. The base 16 may provide a generally flat surface 22 for supporting the charging hub 10 on a support surface (not shown), such as a table, the ground, etc. The charging hub 10 may include a ¼ in.-20 thread male or female interface (not shown), e.g., on the base 16 or any other part of the charging hub 10, so that it can connect and tie into a conventional tripod. In other implementations, the charging hub 10 may include features for mounting the charging hub 10 to the tripod illustrated and described in U.S. Provisional Patent Application No. 63/072,383 (the "'383 Application") filed on August 31, 2020, and U.S. Provisional Patent Application No. 63/082,212 (the "'212 Application") filed on September 23, 2020, the entire contents of both of which are fully incorporated herein. The charging hub 10 may be one of the accessory devices 200 disclosed in the '383 and '212 Applications, and reference is made to such features for mounting the accessory devices 200 to the tripod as described therein. An implementation including such features is disclosed with reference to FIGS. 9-12 and described in further detail later on in this application.

The housing 12 may also define a plurality of receptacles 24, each receptacle24 for mechanically and electrically coupling the charging hub 10 to a satellite device 26. Each receptacle 24 also physically supports a satellite device 26. Each receptacle 24 may be defined by a concave recess in the housing 12 as shown in the illustrated implementation, or a generally flat interface in other implementations (e.g., flush with the housing 12), or a convex interface in yet other implementations (e.g., a generally cylindrical outer surface on the housing 12). In the illustrated implementation, each receptacle 24 may be substantially identical to another. As such, it should be understood that description of each of the plurality of receptacles 24 is the same and only one receptacle 24 need be described in detail herein. However, in other implementations, the plurality of receptacles 24 may have differences, e.g., in shape and in the arrangement of latching and charging features to be described below.

In the illustrated implementation, the housing 12 includes four receptacles 24 arranged symmetrically about a central axis A of the charging hub 10. In other implementations, the housing 12 may include any number of receptacles 24, such as one, two, three, five, or more, arranged symmetrically or non-symmetrically.

The receptacle 24 may be configured as a recess in the body 14. However, in other implementations, the receptacle 24 may be generally flush with the body 14 or may project from the body 14. The receptacle 24 may be shaped and sized to generally correspond with the shape and size of an interface 28 on the satellite device 26 for receiving the satellite device 26 therein. An electrical connector 30 may terminate within the receptacle 24. The electrical connector 30 is electrically coupled with a conductor and/or a charging circuit, such as a 5 ampere charger or a charger configured for any other suitable electric current to provide faster or slower charging speeds, housed in the charging hub 10. The electrical connector 30 may be a reusable interface for electrically connecting the charging hub 10 to the satellite device 26 to provide electrical power. The electrical connector 30 may also provide a data connection for transferring data signals and/or control signals between the charging hub and the satellite device 26, such as digital audio, video, control signals, and other data. In the illustrated implementation, the electrical connector 30 includes a universal serial bus type-C (USB-C) connector with 24 pins and rotational symmetry. In the illustrated implementation, the electrical connector 30 is a male connector, however in other implementations the electrical connector 30 may be a female connector. In yet other implementations, other USB connector types may be employed, and other non-USB connectors may also be employed.

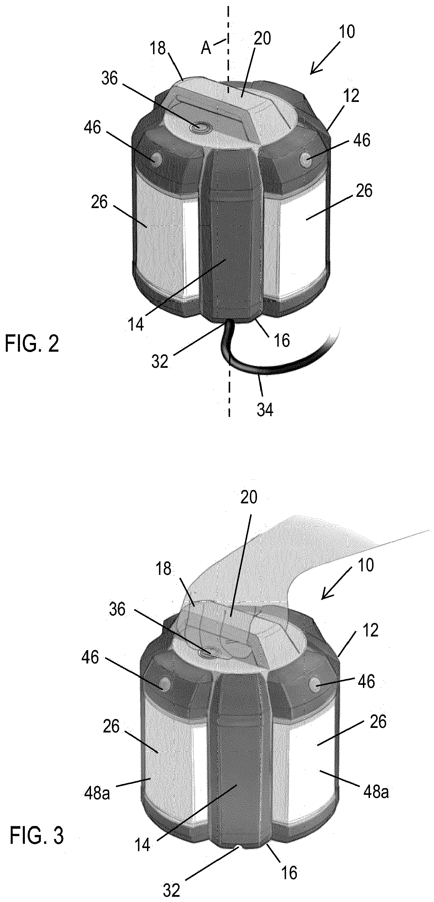

The charging hub 10 may include a charging port 32 disposed on the base 16 for receiving a power cord 34 (FIG. 2). The charging port 32 may be an alternating current (AC) power port in some implementations, such as a barrel plug style port or other suitable female port for receiving a barrel plug on the power cord 34. In other implementations, the power cord 34 (e.g., AC power cord) may be fixed (not detachable) from the charging hub 10. In yet other implementations, a direct current (DC) port and/or cord may be employed. The charging port 32 may include a male connector in other implementations. The charging port 32 may be electrically connected to the charging circuit housed within the housing 12, which is electrically connected to each of the electrical connectors 30 (one for each receptacle 24 as described above). Power may be conveyed from the charging port 32 to each of the electrical connectors 30 simultaneously, by way of the charging circuit, when satellite devices 26 are connected to the electrical connectors 30. Thus, the charging hub 10 provides group charging to all connected satellite devices 26 simultaneously. Not every receptacle 24 need be occupied with a satellite device 26 for the charging hub 10 to be operable. In some implementations, the charging hub 10 may charge the connected satellite devices 26 one at a time. In such implementations, the charging hub 10 may charge the satellite devices 26 in the order they were connected to the charging hub 10, and/or based on remaining charge of the satellite devices 26, and/or in a preset order of the receptacles 24.

The power cord 34 may be an AC power cord having a plug for plugging into a conventional wall outlet. In other implementations, the power cord 34 may be a DC power cord having a plug for plugging into a car charger, a laptop, a battery pack, a power bank, or other power supply. In some implementations, the charging hub 10 may include separate ports for both an AC power cord and a DC power cord.

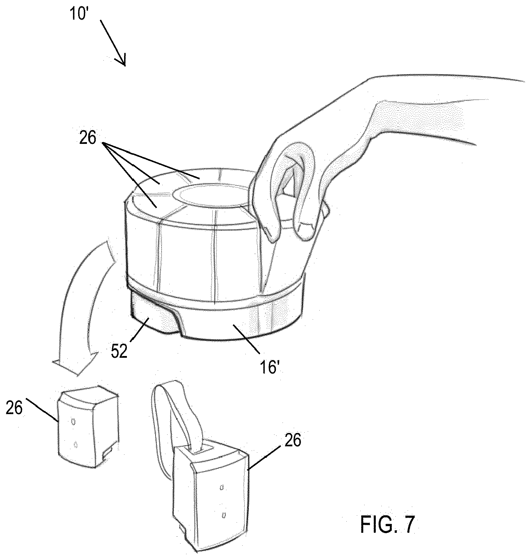

The charging hub 10 may receive power from an external power supply by way of the power cord 34. Thus, in the illustrated implementation of FIGS. 1-6, the charging hub 10 does not include a self-contained power supply such as a battery. However, in other implementations, a battery (e.g., see battery pack 52 described below and shown in FIG. 7, or battery pack 152 described below and shown in FIGS. 9-12) may be coupled to the charging hub 10. In such other implementations, the battery may be a conventional rechargeable battery, and may be removable/replaceable or may be built-in to the charging hub 10. The charging hub 10 may include the battery and/or the AC and/or the DC power cords/ports described above, thus providing the charging hub 10 with hybrid power capabilities.

For example, another implementation of a charging hub 10' is illustrated in FIG. 7 in which a battery pack 52 may be removably coupled to the charging hub 10', e.g., to the base 16' or any other suitable location. The battery pack 52 may include a power tool battery pack, such as the battery pack illustrated and described in the '383 Application. The charging hub 10' may include corresponding features for receiving the battery pack 52, such as the device mounting features 216 and device electrical contacts 220 illustrated and described in the '383 Application. The device mounting features 216 and device electrical contacts 220 may be disposed in the base 16' or any other suitable location on the charging hub 10'. Features of the charging hub 10' may also be employed on the charging hub 10 and vice versa.

Returning to FIGS. 1-6, the charging hub 10 may include an actuator 36 disposed on an outer surface of the housing 12. In the illustrated implementation, the actuator 36 is disposed on a top surface of the housing 12 generally opposite the base 16 and adjacent the handle 18. However, the actuator 36 may be disposed on other surfaces of the housing 12 or on the handle 18 in other implementations. The actuator 36 may be configured as a button (e.g., a press button) in the illustrated implementation and may be electrically configured to activate and deactivate the connected satellite devices 26, e.g., to toggle between turning ON and OFF the connected satellite devices 26. For example, when one or more of the satellite devices 26 include a light (as will be described in greater detail below), the actuator 36 may be configured to toggle between turning ON and OFF the connected satellite devices 26 simultaneously. In other implementations, the actuator 36 may be configured to cycle through any number of different modes, e.g., from turning the connected satellite devices 26 on a LOW setting (e.g., a low light or other low ON setting depending on the type attached, such as low volume, low speed, low power, etc.), to increasing to a HIGH setting (e.g., a brighter light or other higher ON setting such as high volume, high speed, high power, etc.), to OFF, and then back to LOW, etc., every time the actuator 36 is actuated. In other implementations, the actuator 36 may include other actuatable interfaces, such as a rocker switch, a slider switch, a capacitive touch button, a resistive touch button, etc. In yet other implementations, more than one actuator 36 may be employed. For example, one of the actuators 36 may be configured to turn the connected satellite devices 26 ON and OFF, and another one of the actuators 36 may be configured to switch the connected satellite devices 26 between the different modes, such as LOW, MEDIUM, HIGH, or other suitable modes, such as speaker pairing.

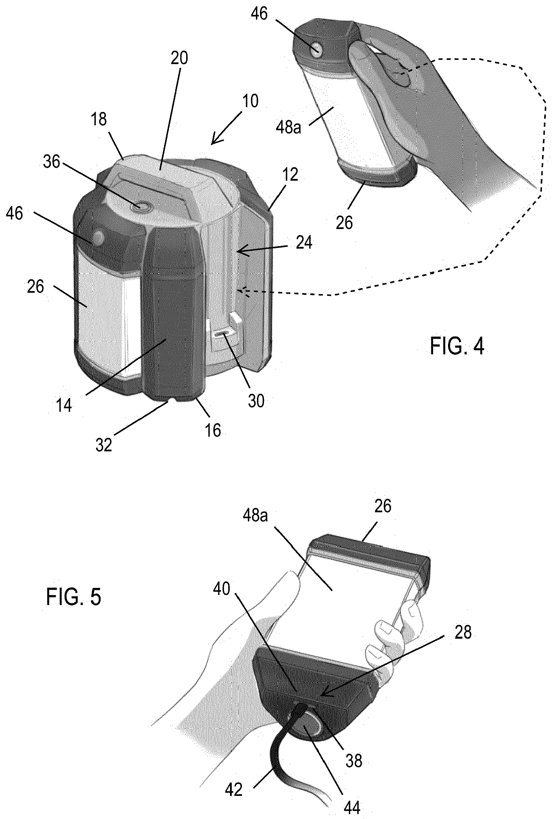

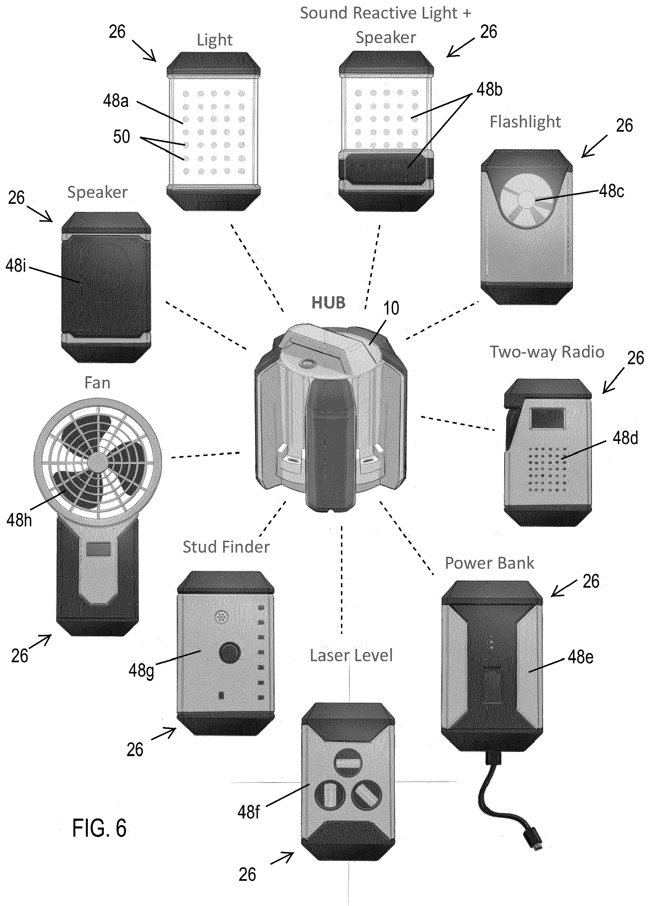

FIGS. 4-5 illustrate the satellite device 26 being configured as a light, and more specifically illustrates a plurality of the satellite devices 26 each configured as a light. In the illustrated implementation, each of the satellite devices 26 is substantially identical. However, in other implementations, the plurality of satellite devices 26 may include a variety of different types of satellite devices, as illustrated in FIG. 6 and described in greater detail below. Regardless of the type, all of the plurality of satellite devices 26 disclosed herein include the interface 28 sized and shaped to be received in any one of the receptacles 24. The interface 28 may include a satellite port 38 and may also include a mechanical coupling 40, such as a latch, a snap-fit, etc., for mechanically coupling the satellite device 26 to the charging hub 10 to be supported in the receptacle 24. The satellite port 38 may mate with the electrical connector 30 to electrically couple the satellite device 26 to the charging hub 10. In some implementations, the mechanical coupling 40 may be provided solely by the satellite port 38 connection with the electrical connector 30.

The satellite port 38 may include a USB-C port, illustrated as a female port in FIG. 5, though the satellite port 38 may include a male connector in other implementations. The satellite port 38 may be coupleable with a cord 42, such as a cord with a USB-C connector as illustrated in FIG. 5, or other types of USB or non-USB cords in other implementations. The satellite port 38 may complement or mirror the electrical connectors 30 of the charging hub 10.

All of the plurality of satellite devices 26 disclosed herein may also include a charging circuit and a removable and rechargeable battery 44, such as a 4 volt battery or other suitable voltage. The battery 44 may include one or more cells and any suitable chemistry, such as Lithium-ion, Nickel Cadmium, Nickel Metal-Hydride, or the like. In other implementations, the battery 44 may be internal and not removable. In yet other implementations, the battery 44 need not be rechargeable and may merely be replaceable with a new disposable battery. Thus, the satellite device 26 is chargeable and/or powered when separated from (not connected to) the charging hub 10, e.g., by way of a mobile device, power bank, or the like, connected thereto with the cord 42, or by way of the cord 42 being plugged into a wall outlet. The satellite device 26 may additionally or alternatively be powered individually by the battery 44 when connected and when not connected to the charging hub 10. Thus, the battery 44 provides self-contained power to the satellite device 26 for the satellite device 26 to be independently powered and operable whether connected to the charging hub 10 or not.

All of the plurality of satellite devices 26 disclosed herein may also include a satellite actuator 46 for turning the satellite device 26 ON and OFF. The satellite actuator 46 is configured as a button (e.g., a press button) in the illustrated implementation and is electrically configured to activate and deactivate the satellite device 26, e.g., to toggle between turning ON and OFF the satellite device 26, and more specifically an implement 48a-48i integrated with the satellite device 26. In other implementations, the satellite actuator 46 may include other actuatable interfaces, such as a rocker switch, a slider switch, a capacitive touch button, a resistive touch button, etc. In yet other implementations, the satellite actuator 46 may be configured to cycle from turning the implement 48a-48i on a LOW setting (e.g., a low light or other low ON setting depending on the type attached, such as low volume, low speed, low power, etc.), to increasing to a HIGH setting (e.g., a brighter light or other higher ON setting such as high volume, high speed, high power, etc.), to OFF, and then back to LOW, etc., every time the satellite actuator 46 is actuated. In yet other implementations, more than one satellite actuator 46 may be employed. For example, one of the satellite actuators 46 may be configured to turn the implement 48a-48i ON and OFF, and another one of the satellite actuators 46 may be configured to switch the implement 48a-48i between different modes, such as LOW, MEDIUM, HIGH, or other suitable modes, such as speaker pairing.

The implement 48a-48i defines the "type" of satellite device 26. In the illustrated implementation of FIGS. 2-5, the implement 48a may include a light. For example, the implement 48a may include one or more light sources 50, such as light emitting diodes (LEDs) or other suitable types of light emitting devices or bulbs. The light sources 50 may be disposed to emit light from one or more surfaces or sides of the satellite device 26. In the illustrated implementation, the light sources 50 are arranged around a front, back, and sides of the satellite device 26 to provide a 360 degree distribution of light. In other implementations, the light sources 50 may have other configurations.

FIG. 6 illustrates the satellite devices 26 having other implements 48a-48i. For example, the implement 48b may include a sound-reactive light and speaker combination, the implement 48c may include a flashlight (e.g., having one or more light sources directed out of a single side of the satellite device 26), the implement 48d may include a two-way radio, the implement 48e may include a power bank (e.g., having a dedicated battery and a USB port connectable to a USB cable/connector), the implement 48f may include a laser level (e.g., including one or more bubble tube liquid levels and one or more laser beam emitters), the implement 48g may include a stud finder, the implement 48h may include a fan, and the implement 48i may include a speaker. Other implements and other combinations of implements are possible.

The charging hub 10 and satellite devices 26 illustrated in FIG. 6 may be grouped into kits in any number and combination. For example, one kit may include four satellite devices 26 each having light implements 48a, with or without the charging hub 10. Another kit may include satellite devices 26 including one with the laser level implement 48f, one with the flashlight implement 48c, one with the stud finder implement 48g, and one with the power bank implement 48e, with or without the charging hub 10. Another kit may include four satellite devices 26 each having two-way radio implements 48d, with or without the charging hub 10. Yet another kit may include four satellite devices 26 each having flashlight implements 48c, with or without the charging hub 10. Yet another kit may include four satellite devices 26 each having fan implements 48h, with or without the charging hub 10. Yet another kit may include four satellite devices 26 each having speaker implements 48i, with or without the charging hub 10. Another kit may include any one or more of the implements 48a-48i, with or without the charging hub 10. Any other combination of satellite devices 26 with or without the charging hub 10 may be combined into a kit.

A lantern configuration is illustrated in FIG. 3 with an operator carrying the charging hub 10 by the handle 18 along with the connected satellite devices 26, the connected satellite devices 26 all including the implement 48a configured as a light and all powered and/or controlled simultaneously by way of the charging hub 10. The lantern configuration provides 360 degree lighting around the charging hub 10 (e.g., about the axis A). Other configurations in which all of the connected satellite devices 26 cooperate to form a useful modular unit having 360-degree output are contemplated (e.g., see the kits described above). For example, a speaker configuration may include the charging hub 10 having all the connected satellite devices 26 including the implement 48b with sound-reactive light and speaker combination and/or the implement 48i with the speaker. Another configuration may include the charging hub 10 having a mix of lights and speakers (e.g., the implements 48a, 48b, 48i). Other configurations may include any other combination of other implements 48a-48i, as well as other implements not illustrated.

In operation, an operator may attach any one or more of the satellite devices 26 to the charging hub 10. The attached satellite devices 26 may be turned ON and OFF by operator actuation of the actuator 36. The operator may switch between modes using the actuator 36 and/or the satellite actuator 46 while connected to the charging hub 10. The operator may lift the charging hub 10 and any attached satellite devices 26 by the handle 18. The operator may plug in the charging hub 10 by way of the power cord 34 to charge and/or power the attached satellite devices 26.

The operator may disconnect the attached satellite devices 26 from the charging hub 10. In a disconnected state, the operator may independently operate each of the satellite devices 26, e.g., by individually turning ON and OFF the implement 48a-48i on each of the satellite devices 26, and/or changing the mode, by way of the satellite actuator 46. The operator may plug the cord 42 into each of the satellite devices 26 to individually charge and/or power the satellite device 26.

As described above, FIG. 7 illustrates another implementation of a charging hub 10' in which a battery pack 52 may be removably coupled to the charging hub 10', e.g., to the base 16' or any other suitable location.

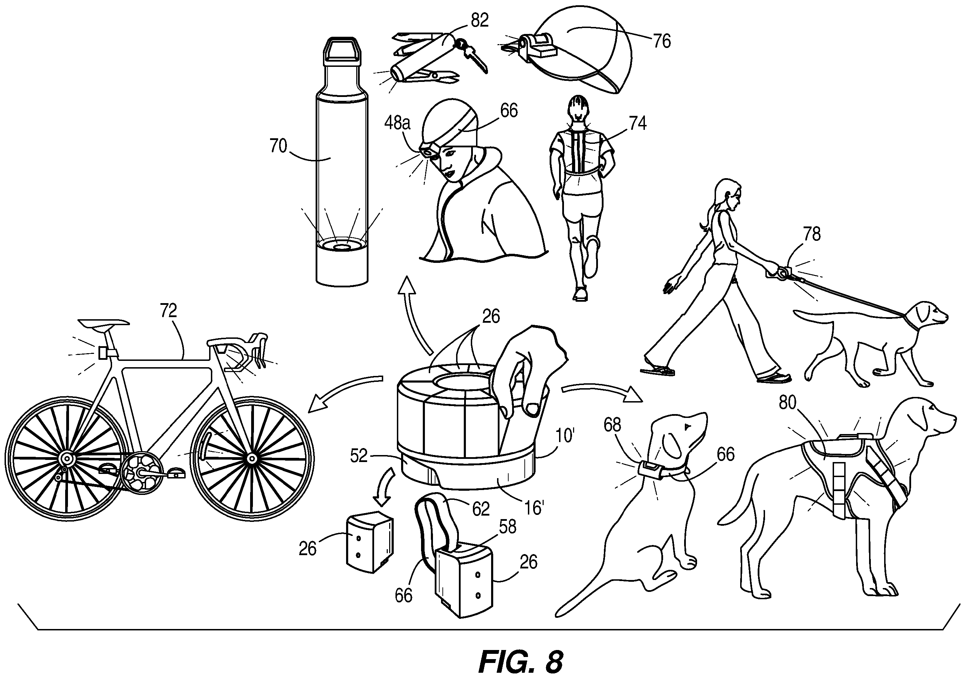

As shown in FIG. 8, the satellite devices 26 may be equipped with mounting features 58 which may receive a mounting device 62. The mounting device 62 may be used to couple the removed satellite device 26 in a variety of positions and configurations to provide versatile, hands free support for the devices. In the implementation where the satellite device 26 includes an implement 48a configured as a light, the mounting device 62 may position the satellite device 26 to provide different lighting outputs. In some implementations, such as that shown in FIG. 7, the mounting device 62 may be formed as a strap 66. The strap 66 may be used to couple the satellite device 26 around a user's head such that the implement 48a acts as a headlamp. The strap 66 may also be used to couple the satellite device 26 to a pet collar 68 to provide illumination of the surroundings of the pet collar 68 and to serve as an indicator of the location of the pet collar 68. In some implementations the mounting device 62 may also include a clip device, a magnet, or other mounts not shown herein. The mounting device 62 may include multiple mounts in combination. The mounting device 62 can be used to couple the satellite device 26 to a water bottle 70 to act as a lantern, a bike 72 to act as a headlight, to a user's clothing 74, to a hat or other headwear 76, to a leash 78, to a pet harness 80, and to a keychain or multitool 82. Other configurations or uses are also considered as would be obvious to a person of skill in the art. The removable satellite devices 26 coupled with the mounting device 62 allows for versatile mounting solutions for the desired implement 48.

FIGS. 9-14 illustrate another implementation of a charging hub 110. The charging hub 110 is similar to the charging hub 10 of FIGS. 1-6, and similar features are identified by similar reference numbers plus "100". Generally, only the differences between the charging hub 110 and the charging hub 10 are discussed herein.

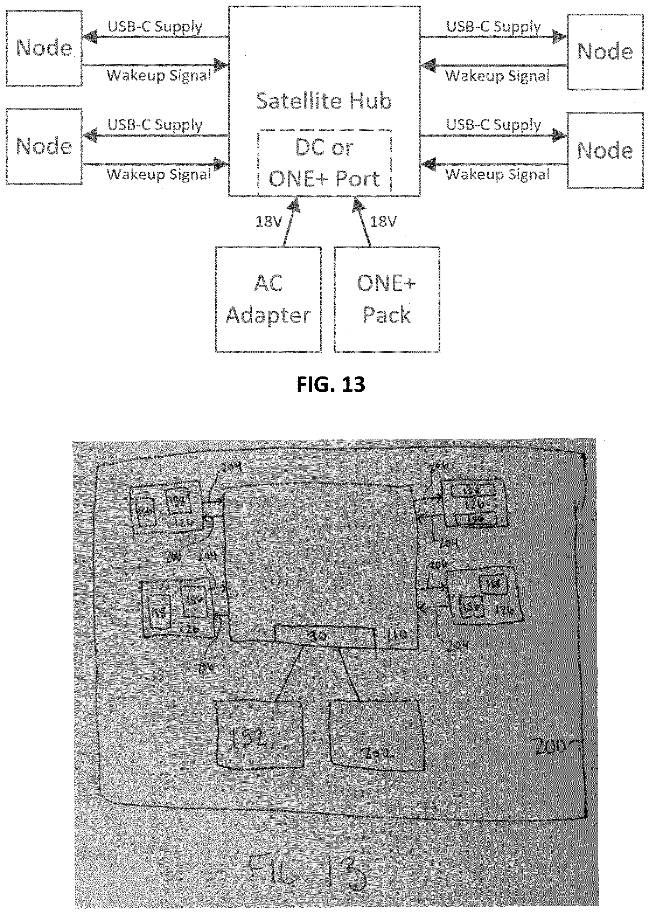

With reference to FIG. 9, the charging hub 110 may include a housing 112 defining a body 114 with a base 116 and a handle 118. The housing 112 may also define a plurality of satellite device receptacles 124, each configured to receive a satellite device 126. The plurality of receptacles 124 may each be identically formed or may have different mechanical or electrical connection features. In the illustrated implementation, each receptacle 124 may be identical to the other receptacles 124. As discussed above, the satellite devices 126 may include an implement 148. Each satellite device 126 may perform a function such as a function associated with the implement 148. As discussed above, the function may be the function performed by a speaker, a light, a radio, etc. In the illustrated implementation, the satellite devices 126 may each perform the same function and include implements 148a able to perform a lighting function. However, in other implementations, the satellite devices 126 may include other implements 148. Each satellite device 126 may include a device housing 154 and a rechargeable battery 156 (FIG. 13). Each implement 148a may include a plurality of LEDS 158 (FIG. 13) supported in the device housing 154 for providing illumination to an area. The device housing 154 may also include a transparent or translucent cover 160 which allows the illumination to be projected in a forward direction.

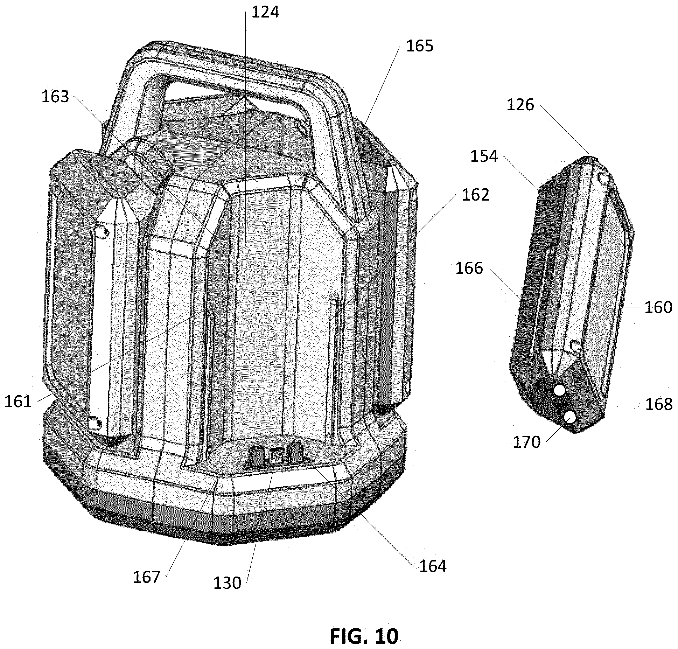

With reference to FIG. 10, each receptacle 124 may be formed as a recess 161. The recess 161 may be generally trapezoidal and may include two angled side walls 163, a rear wall 165, and a lower surface 167. Other shapes of recess may also be used. The recess 161 may include an electrical connector 130 positioned on the lower surface 167 of the recess 161. In the illustrated implementation, the electrical connector 130 may include a male type USB-C connector. The receptacle 124 may also include a set of rails 162 positioned on side walls 163 of the recess 161 and a set of projections 164 located adjacent the electrical connector 130. The set of projections 164 may serve to protect the electrical connector 130 from damage when the satellite device 126 is removed from the receptacle 124. The satellite device 126 may include a set of grooves 166 which interacts with the set of rails 162 to slidingly mount the satellite device 126 in the receptacle 124. The satellite device housing 154 may include a device electrical connector 168, such as a female USB-C connector, and a set of slots which correspond to the projections 164. The projections 164 may serve to further mechanically couple the satellite device 126 with the receptacle 124. In other embodiments, the receptacle 124 and/or the satellite device 126 may include other structures to mechanically and electrically couple the satellite device to the receptacle 124. For example, the receptacle 124 may include grooves and the satellite device 126 may include rails, and/or one or both of the receptacle 124 and the satellite device 126 may include magnets.

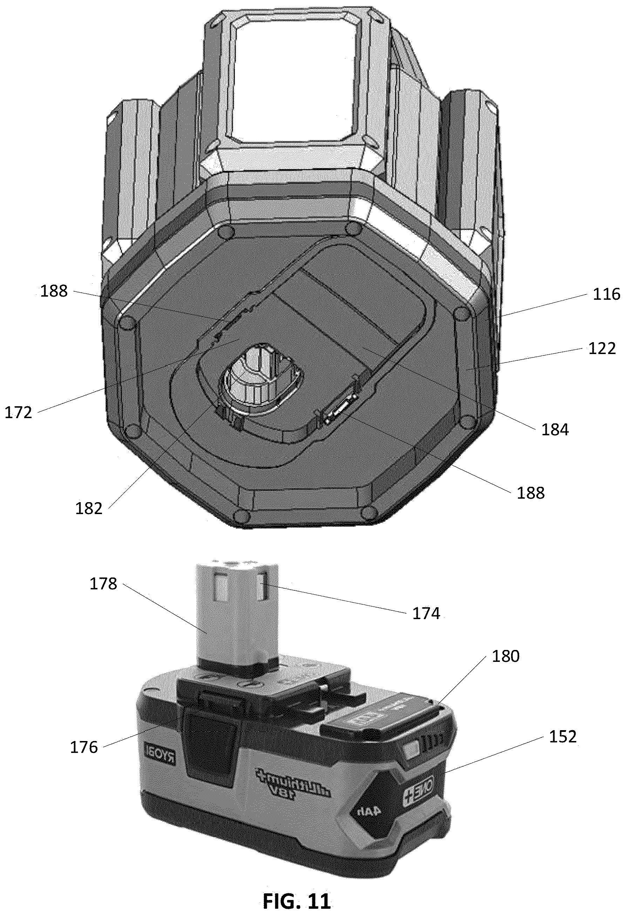

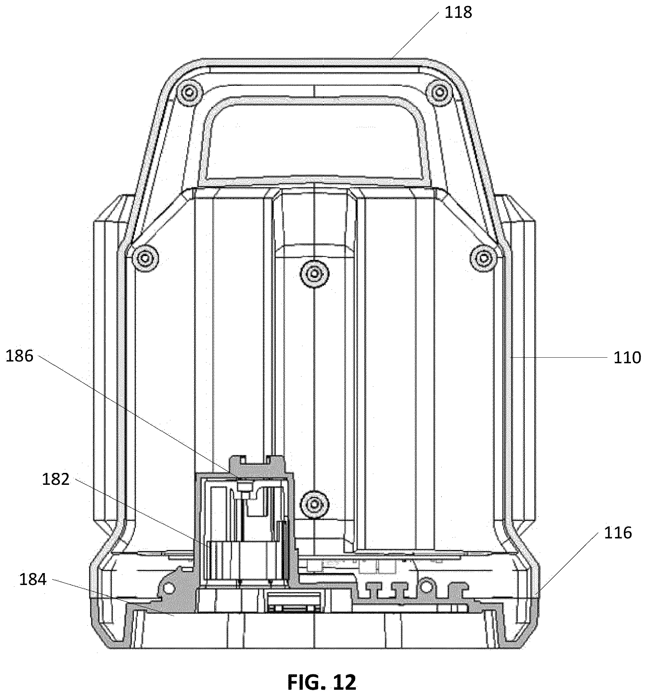

With reference to FIGS. 11 and 12, the base 116 of the charging hub 110 may include a battery receiving area 172 (also referred to herein as a battery receptacle) for receiving a removable and rechargeable battery pack 152. In the illustrated implementation, the battery pack 152 is a power tool battery pack. The battery pack 152 may be a tower-style battery back or a slide-on-style battery pack. The battery pack 152 may include battery electrical contacts 174 and battery mechanical features, such as latches 176. The battery pack 152 may include a stem 178 including the electrical contacts 174 and a battery base 180 including the latches 176. In other implementations, the battery pack 152 may be formed in other configurations.

The battery receiving area 172 may be sized and shaped to receive the battery pack 152. The battery receiving area 172 may include a channel 182 and a recess 184. The channel 182 may include hub electrical contacts 186. The recess 184 may include hub mechanical mounting features, such as ridges 188. As shown in FIG. 12, when the battery pack 152 is coupled to the base 116, the battery base 180 may extend from the base 116 such that the battery base 180 can be used to support the charging hub 110 on a support surface (e.g., a table, a workbench, a desk, the ground, etc.). In other implementations, the recess 184 may be sized such that when the battery pack 152 is coupled to the base 116, the bottom of the battery base 180 may be flush or recessed relative to the flat surface 122 of the base 116.

The battery pack 152 may be coupled to the base 116 by inserting the stem 178 into the channel 182 and bringing the battery pack 152 toward the base 116 until the battery base 180 is received in the recess 184 and the latches 176 engage the grooves 166. In this coupled position, the battery electrical contacts 174 may be electrically connected to the hub electrical contacts 186.

FIG. 13 illustrates a schematic diagram of an electrical system 200 of the charging hub 110. The charging hub 110 may include a port (e.g., the battery receiving area 172) for connecting to a power supply. The power supply may be a DC power source, such as the battery pack 152, and may be received by the battery receiving area 172. The power supply may alternately be an AC power supply such as that provided by a wall outlet. The port may receive an AC adaptor 202 allowing the charging hub 110 to be electrically connected by AC power.

The charging hub 110 may communicate with each of the satellite devices 126 individually. In the illustrated system, each satellite device 126 may send a wakeup signal 204 to the charging hub 110 when the satellite device 126 is connected to the electrical connector 130 and in need of power, for example, when the voltage of the rechargeable battery 156 is below a predetermined threshold. Once the wakeup signal 204 has been sent, the charging hub 110 may allow power to be sent to the satellite devices 126 via a USB-C supply connection 206. The power may be supplied to the satellite device 126 at a voltage of 5 volts. In other implementations, other voltages may be provided. When the satellite devices 126 are electrically connected to the charging hub 110 and the battery pack 152 is electrically connected to the charging hub 110, power may be provided from the battery pack 152 to the rechargeable batteries 156 in order to raise the voltage level of the rechargeable batteries 156. In the present implementation, the rechargeable batteries 156 may include Lithium-ion cells. In other implementations, other rechargeable batteries may be used. In some implementations, power can also be supplied from the battery pack 152 through the charging hub 110 and directly to the LEDs 158 or the electronic components of the other implements 48 to power the functions of the satellite devices, as well as to recharge the rechargeable batteries 156. Use of the wakeup signal 204 may reduce unnecessary drainage of the battery pack 152 when the satellite devices 126 are connected.

As mentioned above, in some implementations an AC adaptor may be used to convert AC power from an AC power source to DC power. The DC power may then be routed through the charging hub 110 to the satellite devices 126 after the wakeup signal 204 has been sent. The power may be used to power functions of the satellite devices 126 as well as to recharge the rechargeable batteries 156.

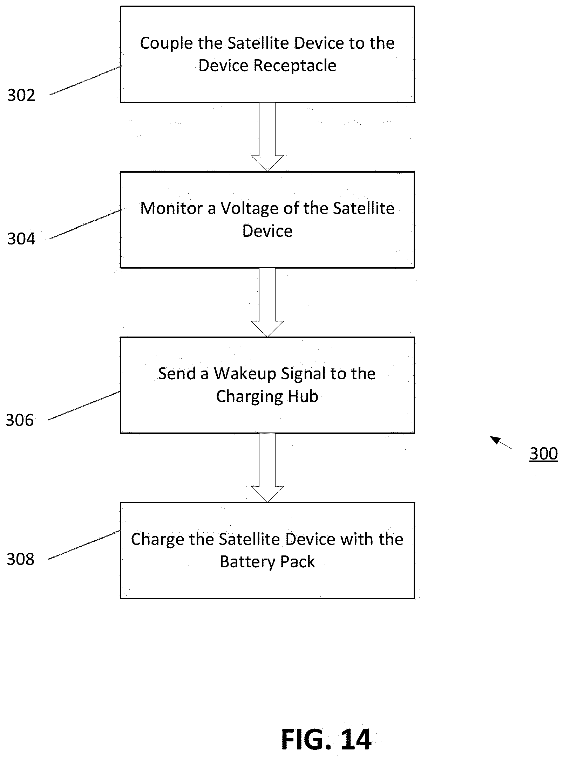

FIG. 14 illustrates a method 300 of operating the charging hub 110. Although the method 300 depicts certain steps, not all of the steps need to be performed or need to be performed in the order presented. The method 300 may include coupling the satellite device 126 to the receptacle 124 of the charging hub 110 at step 302. Coupling the satellite device 126 to the receptacle 124 may include positioning the satellite device 126 adjacent the top of the recess 161, aligning the grooves 166 with the rails 162, and sliding the satellite device 126 relative to the housing 112 toward the lower surface 167 of the recess 161 until the electrical connector 130 is electrically coupled to the electrical connector 168.

The method 300 may also include monitoring a voltage of the satellite device 126 at step 304. The satellite device 126 may include a monitoring circuit configured to detect the voltage of the rechargeable batteries 156 of the satellite device 126. The monitoring circuit may be powered by the rechargeable batteries 156.

The method 300 may further include sending the wakeup signal 204 to the charging hub 110 when the voltage drops below a predetermined threshold voltage at step 306. In some implementations, the predetermined threshold voltage may set as a percentage of a maximum voltage of the rechargeable battery 156 of the satellite device 126. For example, the threshold voltage may equal 75%, 50%, 25%, or 10% of the maximum voltage. Other values may be used. For example, the threshold voltage may be anywhere between 1% to 75% of the maximum voltage. In other implementations, the threshold voltage may be set to equal a specific value. For example, the threshold voltage may equal 3 volts, 2 volts, 1, volt, or 0.5 volts. Other values may be used. For example, the threshold voltage may be anywhere between 0.1 and 3 volts. The wakeup signal 204 may be sent to the charging hub 110 through the electrical connector 130.

The method 300 may also include charging the satellite device 126 with the battery pack 152 at step 308. Specifically, the battery pack 152 may supply power to the rechargeable batteries 156 of the satellite device 126 through a power supply path. The power supply path may run from the electrical contacts 174 to the electrical contacts 186 of the charging hub 110, through the charging hub 110 to the electrical connector 130, and through the device electrical connector 168 to the rechargeable batteries 156.

The method 300 may allow the battery pack 152 to avoid unnecessary drainage by charging each satellite device 126 only when the satellite device 126 is below a predetermined charge threshold.

Thus, the disclosure provides, among other things, a charging hub 10, 10', 110 and modular satellite devices 26, 126 interchangeably connectable thereto in any combination, and a kit including one or more satellite devices 26, 26 with or without the charging hub 10, 10', 110. Although the disclosure has been described in detail with reference to certain preferred implementations, variations and modifications exist within the scope and spirit of one or more independent aspects of the disclosure as described. Various features and advantages of the disclosure are set forth in the following claims.

## Claims

1. A charging hub comprising:
a housing including
a body having a base,
a plurality of satellite device receptacles positioned on the body, the plurality of satellite device receptacles configured to removably couple a plurality of satellite devices to the body, each receptacle having an electrical connector configured to charge the plurality of satellite devices, and
a battery receptacle positioned on the body; and
a battery pack removably coupled to the housing at the battery receptacle, the battery pack operable to provide power to the electrical connectors.

2. The charging hub of claim 1, wherein the plurality of satellite device receptacles is configured to physically support the plurality of satellite devices.

3. The charging hub of claim 2, wherein each of the plurality of satellite device receptacles includes a rail configured to slidingly engage each of the plurality of satellite devices.

4. The charging hub of claim 1, wherein the body includes a handle extending from a top of the body opposite the base.

5. The charging hub of claim 1, wherein the plurality of satellite device receptacles are evenly spaced around a central axis extending through the body.

6. The charging hub of claim 1, wherein each of the plurality of satellite device receptacles is formed as a recess set into an outer wall of the body.

7. The charging hub of claim 6, wherein each receptacle includes a pair of rails on sidewalls of the recess, and wherein the electrical connector is positioned on a lower surface of the recess.

8. The charging hub of claim 1, wherein each electrical connector is a USB port.

9. The charging hub of claim 1, wherein the battery receptacle is positioned on the base.

10. The charging hub of claim 9, wherein the battery receptacle includes a channel formed in a lower surface of the base.

11. The charging hub of claim 1, wherein the battery pack is a power tool battery pack having electrical contacts and a latch operable to releasably secure the power tool battery pack to the housing.

12. The charging hub of claim 1, wherein the plurality of satellite device receptacles includes four satellite device receptacles.

13. A charging hub and satellite device kit comprising:
a charging hub including a plurality of receptacles, the charging hub configured to receive power from a power supply;
a first satellite device removably coupled to one of the plurality of receptacles, the first satellite device having a first rechargeable battery configured to be charged by the power supply when the first satellite device is coupled to the one of the plurality of receptacles, the first satellite device operable to perform a first function; and
a second satellite device removably coupled to another of the plurality of receptacles, the second satellite device having a second rechargeable battery configured to be charged by the power supply when the second satellite device is coupled to the another of the plurality of receptacles, the second satellite device operable to perform a second function that is different from the first function.

14. The kit of claim 13, wherein the first satellite device is one selected from a group consisting of a light, a speaker, a fan, a stud finder, a laser level, a power bank, a two-way radio, a radio, a combination light and speaker, and a flashlight, and
wherein the second satellite device is another selected from the group consisting of a light, a speaker, a fan, a stud finder, a laser level, a power bank, a two-way radio, a radio, a combination light and speaker, and a flashlight.

15. The kit of claim 13, wherein the charging hub includes a battery receptacle configured to removably receive a battery pack that acts as the power supply.

16. A method of charging a satellite device with a charging hub, the satellite device including a rechargeable battery, the charging hub including a housing having a receptacle and a battery pack removably coupled to the housing, the method comprising:
coupling the satellite device to the receptacle of the charging hub;
monitoring a voltage of the satellite device;
sending a wakeup signal from the satellite device to the charging hub when the voltage falls below a predetermined threshold;
in response to the wakeup signal, charging the satellite device with the battery pack connected to the charging hub.

17. The method of claim 16, wherein coupling the satellite device to the receptacle of the charging hub includes physically supporting the satellite device on the housing of the charging hub.

18. The method of claim 17, wherein coupling the satellite device to the receptacle of the charging hub includes sliding the satellite device along a rail positioned in the receptacle.

19. The method of claim 16, wherein coupling the satellite device to the receptacle of the charging hub includes plugging a USB port into the satellite device.

20. The method of claim 16, wherein the housing of the charging hub has a plurality of receptacles, and further comprising coupling a plurality of satellite devices to the plurality of receptacles of the charging hub to simultaneously support the plurality of satellite devices on the charging hub.
